# EUROPÄISCHE PATENTSCHRIFT

(11) **EP 1 025 938 B1**
(45) Veröffentlichungstag und Bekanntmachung des Hinweises auf die Patenterteilung: **05.06.2002**
(21) Anmeldenummer: 00200299.6
(22) Anmeldetag: 31.01.2000
(51) Int. Cl.: B22F 3/15, B32B 15/00, B32B 15/20

(54) **Verfahren zur herstellung eines thermisch hoch belastbaren Verbundbauteiles**
Process for the manufacture of a high temperature resistant composite
Procédé pour la fabrication d'un composite à haute résistance thermique

(30) Priorität: 05.02.1999 AT 7199 U
(43) Veröffentlichungstag der Anmeldung: 09.08.2000
(73) Patentinhaber: PLANSEE Aktiengesellschaft, 6600 Reutte, Tirol (AT)
(72) Erfinder: Plöchl, Laurenz, Dipl. Ing., 9781 Oberdrauburg (AT); Schedler, Bertram, Dipl. Ing., 6600 Ehenbichl (AT)
(74) Vertreter: Lohnert, Wolfgang, Dr.

(56) Entgegenhaltungen:
- EP-A- 0 663 670
- EP-A- 0 741 116
- WO-A-95/07869
- PATENT ABSTRACTS OF JAPAN vol. 1997, no. 08, 29. August 1997 (1997-08-29) & JP 09 103923 A (JAPAN ATOM ENERGY RES INST;KAWASAKI HEAVY IND LTD), 22. April 1997 (1997-04-22)

## Beschreibung

Die Erfindung betrifft ein Verfahren zur Herstellung eines thermisch hoch belastbaren Verbundbauteiles, bestehend aus mindestens einem Graphitteil und mindestens einem mit diesem flächig verbundenen metallischen Teil aus einer aushärtbaren Kupferlegierung.

Graphit ist aufgrund seiner speziellen Eigenschaften wie hohe thermische Belastbarkeit, gute Wärmeleitfähigkeit und geringe Zerstäubungsrate für Bauteile die thermisch stark beansprucht werden, gut geeignet. Der Graphit kommt dabei in den unterschiedlichsten Formen wie als polykristalliner Graphit, als pyrolytischer Graphit oder auch als faserverstärkter Graphit zum Einsatz. Nachteilig bei Graphit ist, dass er selbst in der faserverstärkten Form nur eine beschränkte mechanische Festigkeit und Duktilität aufweist. Zudem verbietet die Porosität des Graphits im allgemeinen schon aus Dichtigkeitsgründen einen direkten Kontakt mit Flüssigkeiten wie es beispielsweise bei aktiv gekühlten Hitzeschilden zur ausreichenden Wärmeableitung notwendig ist. Es ist daher in der Regel so, dass für thermisch hoch belastbare Bauteile Graphit nicht allein, sondern nur in Verbindung mit metallischen Teilen zum Einsatz kommt, die als mechanisch belastbare Träger und bei aktiv gekühlten Bauteilen zusätzlich auch noch zur Leitung der verwendeten Kühlmedien dienen. Wichtig dabei ist eine gute hochtemperaturfeste Verbindung der Graphitteile mit den Metallteilen die im allgemeinen durch eine Hochtemperaturlötung erfolgt.

Generell sollen die mit dem Graphit verbundenen metallischen Teile ähnliche thermische Ausdehnungskoeffizienten wie der Graphit aufweisen um thermische Spannungen des Verbundbauteiles zu vermeiden und darüber hinaus die bei den hohen Temperaturen erforderlichen Festigkeitswerte zur Aufrechterhaltung einer ausreichenden Stabilität beibehalten. Wenn die Verbundbauteile bei Fusionsreaktoren zur Anwendung gelangen ist darüber hinaus auch noch eine gute Belastbarkeit bei Neutronenbelastung von Wichtigkeit.

Molybdän hat sich als Material für die metallischen Teile bewährt. Eine aktiv gekühlte Kühleinrichtung bei der ein oder mehrere Teile aus Graphit mit Kühlmittelleitungen aus Molybdän verbunden sind, ist beispielsweise in der DE 34 16 843 A1 beschrieben. Nachteilig bei derartigen Verbundbauteilen die Molybdän als Material für die metallischen Teile verwenden sind die verhältnismäßig hohen Kosten sowie die schwierige Bearbeitbarkeit und Schweißbarkeit von Molybdän. Deshalb ist versucht worden, Molybdän durch andere hochtemperaturfeste Metalle, beispielsweise hochfeste Kupferlegierungen zu ersetzen. Eine derartige Kupferlegierung, die bis zum Schmelzpunkt praktisch keine Gefügeumwandlung zeigt und damit ihre guten Hochtemperatureigenschaften beibehält ist beispielsweise eine, mit feinen in die Kupfermatrix eingelagerten Al₂O₃-Dispersoiden dispersionsverfestigte, Kupferlegierung.

Diese Legierung kann ohne nachteilige Auswirkungen auf ihre mechanischen Eigenschaften auch mit Hochtemperaturloten bei etwa 900° verlötet werden, so dass Teile aus dieser Legierung gut mit Teilen aus Graphit verbunden werden können.

Ein Nachteil dieser Kupferlegierung ist, dass ihre Bruchzähigkeit unter Neutronenbelastung unter ein kritisches Minimum absinkt, so dass sie nur bedingt für Bauteile geeignet ist, die bei Fusionsreaktoren zur Anwendung kommen sollen.

Weitere bekannte Kupferlegierungen die optimale Hochtemperaturfestigkeitseigenschaften aufweisen, sind aushärtbare Kupfer-Chrom-Zirkon-Legierungen mit etwa 0,3 bis 1,2 Gew.% Chrom, 0,03 bis 0,3 Gew.% Zirkon, Rest Kupfer.
Diese Legierungen weisen gegenüber den dispersionsverfestigten Kupferlegierungen vor allem wesentlich bessere Werte für die Bruchzähigkeit nach Neutronenbelastung auf, so dass sie grundsätzlich für Bauteile, die bei Fusionsreaktoren zum Einsatz kommen, gut geeignet sind.

Kupfer-Chrom-Zirkon-Legierungen sind aushärtbare Legierungen, die ihre guten Eigenschaften im Hinblick auf Festigkeit und Dehnung durch eine spezielle Prozessführung bei der Herstellung und durch einen abschließenden Aushärtungszyklus bei etwa 500°C erreichen. Um diese guten Eigenschaften im ausgehärteten Zustand beizubehalten, dürfen diese Legierungen bei der weiteren Verarbeitung, im besonderen bei der Verbindung mit den Teilen aus Graphit oder im Einsatz die Aushärtungstemperatur von 500°C nicht mehr überschreiten, da sonst eine Ermüdung der Legierung eintritt und die Festigkeitswerte rapide abfallen.

Damit ist die bekannte Hochtemperaturverlötung zur Verbindung von Teilen aus dieser Legierung mit Graphitteilen praktisch ausgeschlossen. Eine Möglichkeit Graphit mit Teilen aus hochfesten Kupferlegierungen unter anderem auch aus Kupfer-Chrom-Zirkon-Legierungen zu verbinden ohne die Steifigkeit des Verbundbauteiles durch das Verbindungsverfahren zu schädigen ist die Anwendung der Elektronenstrahlschweißung, wie es beispielsweise in der EP 0 741 116 A1 beschrieben ist. Nachteilig dabei ist, dass dieses Verfahren nur für Teile aus
Kupfer-Chrom-Zirkon-Legierungen geeignet ist, die eine relativ große Wandstärke aufweisen. Bei dünnwandigen Bauteilen ist auch die beim Elektronenstrahlschweißen auftretende, an sich eher geringe Wärmeentwicklung zu groß, um eine Herabsetzung der guten mechanischen Eigenschaften der
Kupfer-Chrom-Zirkon-Legierung auszuschließen. Darüber hinaus ist insbesondere bei komplexeren Bauteilen, beispielsweise bei aktiv gekühlten Einrichtungen, wo mehrere Graphitteile in mehreren Ebenen mit Kühlmittelleitungen verbunden werden müssen, das Elektronenstrahlschweißen aufgrund einer nicht ausreichenden Zugänglichkeit der zu verbindenden Flächen, oftmals nicht anwendbar.

Aufgabe der Erfindung ist es, ein Verfahren zur Herstellung eines thermisch hoch belastbaren Verbundbauteiles zu schaffen, das auch bei dünnwandigen Teilen aus Kupfer-Chrom-Zirkon-Legierungen und bei komplexeren Verbundbauteilkonstruktion gut anwendbar ist, ohne dass die guten mechanischen Eigenschaften der
Kupfer-Chrom-Zirkon-Legierung in ausgehärtetem Zustand zerstört werden.

Erfindungsgemäß wird dies durch das Verfahren gemäß Anspruch 1 erreicht.

Bei bekannten HIP-Prozessen (heißisostatischen Press-Prozessen) zur Verbindung unterschiedlicher Materialien werden üblicherweise Temperaturen angewendet, die mindestens 70 % vom Schmelzpunkt des niedriger schmelzenden Fügepartners betragen. Gleichzeitig werden hohe Drücke im Bereich von deutlich über 100 MPa (1000 bar) aufgebracht, um eine ausreichend gute Verbindung der einzelnen Fügepartner zu erzielen. Da die Anwendung derart hoher Drücke Graphitmaterialien zerstören würde, war die Anwendung von HIP-Verfahren zur Verbindung unterschiedlicher Teile bisher auf rein metallische Fügepartner beschränkt. Völlig überraschend hat sich nun gezeigt, dass durch die Bereitstellung einer Schicht aus Kupfer oder einer Kupferlegierung an der Verbindungsoberfläche des Graphits zum metallischen Teil, ein HIP-Prozess zur Verbindung unterschiedlicher Teile auch bei Anwendung deutlich niedriger Temperaturen und Drücke als bisher üblich erfolgreich eingesetzt werden kann und damit auch für eine Verbindung von Graphitteilen mit wärmeempfindlichen hochfesten Kupferlegierungen in hervorragender Qualität geeignet ist. Die Schicht aus Kupfer bzw. einer Kupferlegierung kann dabei in unterschiedlicher Weise zwischen den zu verbindenden Flächen der Fügepartner bereitgestellt werden. Beispielsweise ist es denkbar den Graphitteil vor dem HIP-Prozess mit der Kupferschicht zu verbinden oder das Kupfer in Form einer dünnen Folie zwischen den zu verbindenden Flächen vor der Einleitung des HIP-Prozesses anzuordnen.

In einer besonders vorteilhaften Ausgestaltung des Verfahrens wird als aushärtbare Kupferlegierung eine Legierung mit etwa 0,3 bis 1,2 Gew.% Chrom, 0,03 bis 0,3 Gew.% Zirkon, Rest Kupfer, verwendet.
Bei Verwendung dieser Legierung werden besonders gute mechanische Eigenschaften bei Hochtemperaturbelastung auch nach Neutronenbelastung erreicht, die durch Anwendung des HIP-Prozesses zur Verbindung mit dem Graphitteil nicht verschlechtert werden, so dass derartige Bauteile insbesondere auch zum Einsatz in Fusionsreaktoren geeignet sind.

Als besonders vorteilhaft hat es sich bewährt, wenn der HIP-Prozess in einem Temperaturbereich zwischen 400°C und 500°C bei einem Druck zwischen 20-100 MPa (200 und 1000 bar während eines Zeitraumes zwischen 0,5 und 8 Stunden durchgeführt wird.

Als weitere besonders günstige Verfahrensvariante hat es sich bewährt, das Teil aus der aushärtbaren Kupferlegierung vorerst in nicht ausgehärtetem d. h. lösungsgeglühtem und kaltverformtem Zustand einzusetzen und die Aushärtung im Zuge des HIP-Prozess während der Verbindung mit dem Graphitteil vorzunehmen.

Eine weitere Verbesserung des Verfahrens kann sich dadurch ergeben, dass an den zu verbindenden Flächen aus Kupfer bzw. einer Kupferlegierung und der aushärtbaren Kupferlegierung eine Zwischenschicht vorteilhafterweise aus Nickel vorgesehen wird, wodurch eine Fremddiffusion erreicht wird.

Sind als metallische Teile Rohre zur Leitung von Kühlmittel vorgesehen, ist es vorteilhaft, die Schicht aus Kupfer oder einer Kupferlegierung an der Verbindungsoberfläche des Graphitteiles durch Hintergießen der Bohrungswandung herzustellen. Das Hintergießen von Graphitteilen mit einer Schicht aus Kupfer oder einer Kupferlegierung ist eine bekannte Technik und ist beispielsweise ausführlich in der EP 0 663 670 A1 beschrieben.

Im folgenden wird die Erfindung anhand eines Herstellungsbeispieles näher erläutert.

### BEISPIEL

In einem Herstellungsbeispiel wird die erfindungsgemäße Herstellung eines thermisch hoch belastbaren Verbundbauteiles in Form einer aktiv durch ein Kühlmedium kühlbaren Monoblockgeometrie beschrieben.

Als Kühlmittelleitung wurde ein Rohr mit 12 mm Außendurchmesser, 1 mm Wandstärke und 100 mm Länge aus einer Cu-Cr-Zr-Legierung in lösungsgeglühtem und kaltverformtem, aber nicht ausgehärtetem Zustand eingesetzt.
Um den allseitigen isostatischen Druckaufbau für den späteren HIP-Prozess zu erzielen, mussten die einzelnen Komponenten des Verbundbauteiles unter Einbeziehung des Rohres vakuumdicht eingekannt werden. Als Kannungsmaterial wurde ein 1 mm starkes Stahlblech verwendet. Da die direkte Verbindung der Stahlkanne mit dem Cu-Cr-Zr-Rohr nicht möglich ist, wurden an die Rohrenden des Cu-Cr-Zr-Rohres über innenliegende rohrförmige

Adapter aus Nickel kurze Abschnitte eines Stahlrohres angesetzt und durch Elektronenstrahlschweißen mit dem Cu-Cr-Zr-Rohr vakuumdicht verbunden. Anschließend wurden die Rohrenden mechanisch bearbeitet und die äußere Mantelfläche des Cu-Cr-Zr-Rohres mit einer etwa 10 µm starken Nickelschicht galvanisch beschichtet.
Als Graphitteile wurden sechs quaderförmige Blöcke aus faserverstärktem Graphit mit 25 mm Breite, 37 mm Höhe und 15 mm Dicke eingesetzt. Die Graphitteile wurden in gleicher Weise in etwa zentrisch der Dicke nach mit einem Durchmesser von 13 mm durchbohrt. Dann wurden die Bohrungsoberflächen durch Einbringung einer Vielzahl von senkrecht zur Oberfläche verlaufenden Bohrungen von etwa

100 um Durchmesser mittels Laser aufgerauht. Auf die Oberflächen der derart vorbehandelten Bohrungen wurde entsprechend dem in EP 0 663 670 A1 (siehe vom) beschriebenen Verfahren eine etwa 0.5 mm starke OFHC-Kupferschicht aufgebracht.

Nach dem Aufschieben der direkt aneinanderliegenden Graphitteile auf das Cu-Cr-Zr-Rohr wurde der Aufbau mit dem Stahlblech vakuumdicht unter Verbindung der Stahlenden des Cu-Cr-Zr-Rohres eingekannt und evakuiert. Der derart eingekannte Aufbau wurde in einer heißisostatischen Presse während etwa 3 Stunden auf einen Druck von 75 MPa (750 bar) und auf eine Temperatur von 480°C gebracht. Diese Werte wurden über einen Zeitraum von etwa 4 Stunden aufrechterhalten und abschließend während eines Zeitraumes von etwa 4 Stunden wiederum auf Normaldruck und Raumtemperatur gebracht. Schliffe die von der derart hergestellten Monoblockkomponente angefertigt wurden, zeigten eine porenfreie Verbindungszone zwischen den einzelnen Graphitteilen und dem Cu-Cr-Zr-Rohr. Des weiteren konnten keine Hinweise gefunden werden, die auf eine Zerstörung der faserverstärkten Graphitteile hingewiesen hätten.
Das Cu-Cr-Zr-Rohr wies eine Härte von mehr als 160 HV1 auf, was der Härte einer vollständig ausgehärteten Cu-Cr-Zr-Legierung entspricht, d.h. die Aushärtung der Cu-Cr-Zr-Legierung ist automatisch im Zuge des HIP-Prozesses erfolgt.

Des weiteren wurden aus der erfindungsgemäß hergestellten Monoblockkomponente scheibenförmige Scherproben entnommen und in Richtung der Rohrachse belastet. Ein Versagen der Proben trat nicht an den Verbindungszonen, sondern im faserverstärkten Graphit selbst bei einer Last von etwa 30 N/mm² auf, was typisch für den verwendeten Graphit war.

Die Erfindung ist keinesfalls auf das beschriebene Herstellungsbeispiel beschränkt. So ist es beispielsweise auch denkbar, das Verbundbauteil als Flachziegelgeometrie herzustellen, bei der ein ziegelförmiges Teil aus faserverstärktem Graphit, das an der Verbindungsfläche ebenfalls mit Kupfer oder einer Kupferlegierung hintergossen sein kann und das unter den im wesentlichen identischen Herstellungsbedingungen wie vorstehend beschrieben, mit einem blockförmigen Grundkörper aus einer Cu-Cr-Zr-Legierung verbunden wird.

## Patentansprüche

1. Verfahren zur Herstellung eines thermisch hoch belastbaren Verbundbauteiles mittels Fügens, wobei das Verbundbauteil aus mindestens einem Graphitteil und mindestens einem mit diesem flächig verbundenen metallischen Teil aus einer aushärtbaren Kupferlegierung besteht,
worin
zunächst auf die zu fügenden Flächen des/der Graphitteils/-teile eine Schicht bzw. Folie aus Cu oder einer Cu-Legierung aufgebracht wird, die zu fügenden, flächig verbundenen Graphit- und Metallteile daraufhin vakuumdicht eingekannt und anschließend über einen HIP-Prozess bei Temperaturen kleiner 70 % der Schmelztemperatur des metallischen Teiles und bei, der mechanischen Stabilität des Graphitteiles angepasst niedrigen Drücken verbunden werden.

2. Verfahren zur Herstellung eines thermisch hoch belastbaren Verbundbauteiles nach Anspruch 1, **dadurch gekennzeichnet, dass** die auf dem Graphitteil aufgebrachte Schicht bzw. Folie vor dem Kannen der zu fügenden Teile mit dem Graphitteil verbunden wird, oder die Schicht bzw. Folie gleichzeitig mit dem HIP-Prozess mit dem Graphitteil angeordnet wird.

3. Verfahren zur Herstellung eines thermisch hoch belastbaren Verbundbauteiles nach Anspruch 1, **dadurch gekennzeichnet, dass** als aushärtbare Kupferlegierung eine Legierung mit etwa 0,3 bis 1,2 Gew.% Chrom, 0,03 bis 0,3 Gew.% Zirkon, Rest Kupfer, verwendet wird.

4. Verfahren zur Herstellung eines thermisch hoch belastbaren Verbundbauteiles nach einem der Ansprüche 1 bis 2, **dadurch gekennzeichnet, dass** der HIP-Prozeß in einem Temperaturbereich zwischen 400°C und 500°C bei einem Druck zwischen 20 - 100 MPa (200 und 1000 bar) während eines Zeitraumes zwischen 0,5 bis 8 Stunden durchgeführt wird.

5. Verfahren zur Herstellung eines thermisch hoch belastbaren Verbundbauteiles nach einem der Ansprüche 1 bis 3, **dadurch gekennzeichnet, dass** die aushärtbare Kupferlegierung in nicht ausgehärtetem Zustand eingesetzt wird und die Aushärtung automatisch im Zuge des HIP-Prozesses zur Verbindung mit dem Graphitteil erfolgt.

6. Verfahren zur Herstellung eines thermisch hoch belastbaren Verbundbauteiles nach einem der Ansprüche 1 bis 4, **dadurch gekennzeichnet, dass** an den zu verbindenden Flächen aus Kupfer bzw. einer Kupferlegierung des Graphitteiles und der aushärtbaren Kupferlegierung eine Zwischenschicht angeordnet wird.

7. Verfahren zur Herstellung eines thermisch hoch belastbaren Verbundbauteiles nach Anspruch 5, **dadurch gekennzeichnet, dass** die Zwischenschicht aus Nickel besteht.

8. Verfahren zur Herstellung eines thermisch hoch belastbaren Verbundbauteiles nach einem der Ansprüche 1 bis 6, **dadurch gekennzeichnet, dass** das metallische Teil ein Rohr ist, das mit einer entsprechenden Bohrung des Graphitteiles verbunden wird, wobei die Schicht aus Kupfer oder einer Kupferlegierung am Graphitteil durch Hintergießen der Bohrungswandungen hergestellt wird.

## Claims

1. Method for producing a composite structural part with a high thermal load-bearing capacity by means of joining,
wherein the composite structural part consists of at least one graphite part and at least one metallic part, which is flatly connected to the latter, of a precipitation-hardenable copper alloy,
wherein a layer or foil of Cu or a Cu alloy is firstly applied to the faces of the graphite part(s) which are to be joined, the flatly connected graphite and metal parts which are to be joined are thereupon canned in vacuum-tight fashion and then connected by means of a HIP process at temperatures of less than 70% of the melting temperature of the metallic part and at low pressures adapted to the mechanical stability of the graphite part.

2. Method for producing a composite structural part with a high thermal load-bearing capacity according to Claim 1, **characterised in that** the layer or foil which is applied to the graphite part is connected to the graphite part prior to canning the parts which are to be joined, or the layer or foil is disposed with the graphite part at the same time as the HIP process.

3. Method for producing a composite structural part with a high thermal load-bearing capacity according to Claim 1, **characterised in that** an alloy with approximately 0.3 to 1.2 wt.% chromium, 0.03 to 0.3 wt.% zirconium and the remainder copper is used as precipitation-hardenable copper alloy.

4. Method for producing a composite structural part with a high thermal load-bearing capacity according to either of Claims 1 and 2, **characterised in that** the HIP process is carried out in a temperature range between 400°C and 500°C at a pressure between 20 and 100 MPa (200 and 1000 bar) over a period lasting between 0.5 and 8 hours.

5. Method for producing a composite structural part with a high thermal load-bearing capacity according to any one of Claims 1 to 3, **characterised in that** the precipitation-hardenable copper alloy is used in the non-precipitation-hardened state, and the precipitation hardening takes place automatically in the course of the HIP process for connection to the graphite part.

6. Method for producing a composite structural part with a high thermal load-bearing capacity according to any one of Claims 1 to 4, **characterised in that** an intermediate layer is disposed at the copper or copper alloy faces of the graphite part which are to be connected and the precipitation-hardenable copper alloy.

7. Method for producing a composite structural part with a high thermal load-bearing capacity according to Claim 5, **characterised in that** the intermediate layer consists of nickel.

8. Method for producing a composite structural part with a high thermal load-bearing capacity according to any one of Claims 1 to 6, **characterised in that** the metallic part is a pipe, which communicates with a corresponding bore in the graphite part, wherein the layer of copper or a copper alloy at the graphite part is produced by backing the bore wall.

## Revendications

1. Procédé de fabrication d'un composite à haute résistance thermique par assemblage, dans lequel le composite se compose d'au moins un élément de graphite et d'au moins un élément mécanique en alliage de cuivre durcissable attaché par sa surface à celui-ci, et dans lequel:
une couche ou une feuille de Cu ou d'un alliage de Cu est d'abord appliquée sur les surfaces à assembler de l'élément ou des éléments de graphite, les éléments de graphite et de métal à assembler attachés par leurs surfaces sont ensuite gainés de façon étanche au vide, et sont ultérieurement attachés par un processus de compression isostatique à chaud, ou HIP, à des températures inférieures à 70% de la température de fusion de l'élément métallique et à des basses pressions adaptées à la stabilité mécanique de l'élément de graphite.

2. Procédé de fabrication d'un composite à haute résistance thermique selon la revendication 1, **caractérisé en ce que** la couche ou la feuille appliquée sur l'élément de graphite est attachée à l'élément de graphite avant le gainage des éléments à assembler, ou que la couche ou la feuille est disposée avec l'élément de graphite simultanément avec le processus de compression isostatique à chaud.

3. Procédé de fabrication d'un composite à haute résistance thermique selon la revendication 1, **caractérisé en ce que** l'alliage durcissable utilisé est un alliage contenant 0,3 à 1,2 % en poids de chrome, 0,03 à 0,3% en poids de zirconium, solde cuivre.

4. Procédé de fabrication d'un alliage à haute résistance thermique selon l'une des revendications 1 ou 2, **caractérisé en ce que** le processus de compression isostatique à chaud est exécuté dans une plage de températures comprise entre 400°C et 500°C à une pression comprise entre 20 et 100 MPa (200 et 1000 bar) pendant un laps de temps de 0,5 à 9 heures.

5. Procédé de fabrication d'un alliage à haute résistance thermique selon l'une quelconque des revendications 1 à 3, **caractérisé en ce que** l'alliage de cuivre durcissable est utilisé dans son état non durci et que le durcissement s'effectue automatiquement au cours du processus de compression isostatique à chaud exécuté pour l'attache à l'élément de graphite.

6. Procédé de fabrication d'un composite à haute résistance thermique selon l'une quelconque des revendications 1 à 4, **caractérisé en ce qu'**une couche intermédiaire est agencée sur les surfaces, tant de cuivre ou d'alliage de cuivre de l'élément de graphite que de l'alliage de cuivre durcissable, qui doivent être attachées.

7. Procédé de fabrication d'un composite à haute résistance thermique selon la revendication 6, **caractérisé en ce que** la couche intermédiaire est en nickel.

8. Procédé de fabrication d'un composite à haute résistance thermique selon l'une quelconque des revendications 1 à 6, **caractérisé en ce que** l'élément métallique est un tube qui est attaché à un alésage correspondant de l'élément de graphite, et **en ce que** la couche de cuivre ou d'alliage de cuivre est fabriquée sur l'élément de graphite en doublant par coulée les parois de l'alésage.
